# EUROPÄISCHE PATENTSCHRIFT

(11) **EP 0 303 197 B1**
(45) Veröffentlichungstag und Bekanntmachung des Hinweises auf die Patenterteilung: **02.06.1993**
(21) Anmeldenummer: 88112770.8
(22) Anmeldetag: 05.08.1988
(51) Int. Cl.: B29D 30/32

(54) **Verfahren und Vorrichtung zum Anlegen der Wulstkernringe an eine Reifenkarkasse**
Method and apparatus for fitting bead-rings onto a tyre carcass
Procédé et dispositif pour poser les tringles sur une carcasse de pneu

(30) Priorität: 13.08.1987 DE 3726982
(43) Veröffentlichungstag der Anmeldung: 15.02.1989
(73) Patentinhaber: Continental Aktiengesellschaft, 30165 Hannover (DE)
(72) Erfinder: Böttcher, Harry, D-3540 Korbach (DE); Buschmann, Erich, D-3540 Korbach-Lelbach (DE); Fehse, Eberhard, D-3540 Korbach (DE); Sergel, Horst, D-3000 Hannover (DE); Roehrbein, Heinrich, D-3012 Langenhagen 7 (DE)

(56) Entgegenhaltungen:
- DE-A- 2 640 348
- FR-A- 2 228 602
- FR-A- 2 311 656

## Beschreibung

Die Erfindung betrifft ein Verfahren zum Anlegen der Wulstkernringe an eine Reifenkarkasse gemäß dem Oberbegriff des Patentanspruchs 1 sowie eine zur Durchführung dieses Verfahrens geeignete Reifenaufbaumaschine gemäß dem Oberbegriff des Patentanspruchs 3.

Ein Verfahren der genannten Art ist aus der DE-A-23 24 215 bekannt, in der eine Reifenaufbaumaschine und deren Funktionsweise beschrieben sind. In dieser bekannten Maschine wurden die Wulstkernringe mit Hilfe von Anlegevorrichtungen an die Reifenrohkarkasse herangeführt, wobei die Anlegevorrichtungen in zwei zueinander senkrechten Richtungen radial zur Achse der Reifenaufbautrommel verschiebbar und hierdurch zur Aufbautrommel justierbar waren. Hiermit war zwar eine exakte Zentrierung der Wulstkernringe durchführbar, die für den Rundlauf der Reifen am Fahrzeug von ausschlaggebender Bedeutung ist, jedoch bestand immer noch eine wenn auch stark eingeschränkte Möglichkeit, daß die Wulstkernringe infolge von Bedienungsfehlern oder mechanischem Lagerspiel exzentrisch positioniert wurden.

Ferner ist aus der DE-A-2 640 348 eine Vorrichtung gemäß dem Oberbegriff des Patentanspruchs 3 bekannt, mit der eine gewisse Vorzentrierung der Wulstkernringe möglich ist, wobei diese Vorzentrierung jedoch anschließend durch die Verwendung punktuell radial zufassender Greif- und übergabeelemente zumindest teilweise wieder aufgegeben wird. Ferner werden die Wulstkernringe bei der bekannten Vorrichtung radial auf die zylindrische Mantelfläche der Karkasse aufgebracht und ihre endgültige Positionierung ist daher wesentlich von den bei der anschließenden Verformung der Karkasse wirksam werdenden Kräften abhängig.

Es stellte sich daher die Aufgabe, den Wulstkern-Anlegevorgang und die zu dessen Durchführung verwendete Reifenaufbaumaschine so zu gestalten, daß bei weitgehender Mechanisierung des Verfahrensablaufs zwangsweise eine exakte Zentrierung zur Wickeltrommelachse erzielt wird, ohne daß manuelle Eingriffe mit der niemals ganz auszuschlißenden Möglichkeit von Fehlbedienungen erforderlich sind.

Diese Aufgabe wird, ausgehend von der eingangs genannten Verfahrensweise, erfindungsgemäß dadurch gelöst, daß die Wulstkernringe zunächst locker auf die Tragringe aufgelegt und dann mit Hilfe von koaxial zur Wickeltrommelachse angeordneten Schubringen auf den Tragringen axial gleitend in Richtung der Wickeltrommel verschoben werden, wobei sie mit ihren den Schubringen zugewandten Stirnflächen vollständig an diesen zur Anlage gebracht und so zu den Stirnflächen der Wickeltrommel planparallel ausgerichtet und durch gleichzeitiges radiales Aufweiten der Tragringe zur Wickeltrommelachse zentriert werden und daß die Wulstkernringe in der so erzeugten zentrierten und zur Stirnfläche der Wickeltrommel planparallelen Position an den Schubringen fixiert und dann durch axiale Bewegung der Schubringe in Richtung der Wickeltrommel verfahren und in axialer Richtung an die Karkasse gedrückt werden.

Erfindungsgemäß kann dieses Verfahren in besonders vorteilhafter Weise dadurch weitergebildet werden, daß zunächst beide Wulstkernringe im Bereich derselben Stirnseite der auf ihren Minimaldurchmesser eingefallenen Wickeltrommel positioniert werden, wobei der für diese Stirnseite bestimmte erste Wulstkernring locker auf den entsprechenden ersten Tragring und der zweite Wulstkernring locker auf das diesseitige Ende der Wickeltrommel oder eine zwischen der Wickeltrommel und dem ersten Tragring konzentrisch zur Wickeltrommelachse angeordnete und mit dieser rotierbare Wickeltrommel-Verlängerung aufgelegt wird, und daß dann der zweite Wulstkernring mit einem ihn mit einer zur Wickeltrommelachse parallelen Kraftkomponente einseitig treffenden Druckluftstrahl beaufschlagt, zur Wickeltrommelachse gekippt und in einer Schräglage gehalten wird, in der er auf dem Mantel der in Rotation versetzten Wickeltrommel und gegebenenfalls der besagten Wickeltrommel-Verlängerung spiralig abrollt und dabei in axialer Richtung über die Wickeltrommel wandert, bis er locker auf dem zweiten Tragring aufliegt und daß dann die Wickeltrommel, nachdem sie in üblicher Weise mit Karkaßlagen bewickelt wurde, expandiert wird und die Wulstkernringe - durch konzentrisches radiales Aufweiten der Tragringe zur Trommelachse zentriert - an die Karkasse herangeführt und axial gegen diese gedrückt werden.

Wie sich aus dem Vorstehenden ergibt, orientieren sich bei dem erfindungsgemäßen Verfahren alle Bewegungsabläufe der Wulstkernringe unmittelbar - d.h. ohne Zwischenschaltung irgendwelcher Hilfsaggregate wie transversal verschiebbarer Justiereinrichtungen (DE-A-23 24 215) oder seitlich einschwenkbarer, die Wulstkernringe von außen umfassender Greifer (z.B. DE-B-11 80 515 und EP-A-33 637) - an der Wickeltrommelachse, und damit werden die Wulstkernringe zwangsläufig konzentrisch zur Wickeltrommelachse positioniert. Dies gilt insbesondere auch für eine bevorzugte Ausführungsform des erfindungsgemäßen Verfahrens, bei der zunächst beide Wulstkernringe eines Reifens auf derselben Seite der Wickeltrommel aufgelegt und der eine der beiden Wulstkernringe dann durch schräges Abrollen über die Wickeltrommelmantelfläche auf deren andere Seite befördert wird, wonach anschließend durch konzentrisches radiales Aufweiten der beiderseitigen Tragringe und gleichzeitige axiale Verschiebung der Wulstkernringe deren koaxiale und planparallele Positionierung zu den Stirnflächen der Wickeltrommel und der darauf aufgebauten Reifenkarkasse erfolgen kann.

Zur Durchführung des vorstehend beschriebenen Verfahrens wird eine Reifenaufbaumaschine verwendet, die gemäß dem Oberbegriff des Patentanspruchs 3 aufgebaut ist und die erfindungsgemäß dadurch gekennzeichnet ist, daß ihre Tragringe aus konzentrisch zur Wickeltrommelachse angeordneten radial verschiebbaren Segmenten bestehen, deren axiale Breite ein Mehrfaches der Wulstkernbreite beträgt, und daß Schubringe vorgesehen sind, die planparallel zu den Stirnflächen der Wickeltrommel und konzentrisch zur Wickeltrommelachse angeordnet und über die Tragringe hinweg bis an die ihnen jeweils zugewandten Stirnflächen der Wickeltrommel axial verschiebbar sind. Dieser Aufbau schafft die Voraussetzungen dafür, daß die Wulstkernringe durch gleichzeitiges konzentrisch-radiales Auseinanderfahren der sie an ihrem Innenumfang tragenden Segmente und axiales Verschieben mittels der Schubringe schließlich konzentrisch und planparallel zu den Stirnflächen der Wickeltrommel und der auf dieser aufgebauten Reifenkarkasse angeordnet sind. Sobald sie diese Position erreicht haben, können sie durch weitere koaxiale Verschiebung gegen die Reifenkarkasse gepreßt werden, und auf diese Weise erreichen sie eine vollkommen konzentrische Einbaulage an der Karkasse. Um die Zentrierung der Wulstkernringe zur Wickeltrommelachse und ihre planparallele Ausrichtung zu den Wickeltrommelstirnseiten einwandfrei durchführen zu können, weisen die Tragringe vorzugsweise eine axiale Breite auf, die dem 3-bis 10-fachen der Wulstkernbreite entspricht.

Zur konzentrischen radialen Verschiebung der die Wulstkernringe tragenden Segmente sind vorzugsweise konische, koaxial zur Wickeltrommelachse verschiebbare Spreizkörper vorgesehen, auf deren Mantelfläche sich die Segmente gleitend abstützen , so daß jederzeit gewährleistet ist, daß alle Segmente eine konzentrische und abstandsgleiche Lage zur Wickeltrommelachse einnehmen.

Um zu gewährleisten, daß die so erreichte Zentrierung der Wulstkernringe bei deren sich anschließender axialer Verschiebung beibehalten wird, weisen die Schubringe in einer bevorzugten Ausführungsform der erfindungsgemäßen Vorrichtung an ihren der Wickeltrommel zugewandten Stirnseiten ringsum verteilte Halteeinrichtungen auf, die die Wulstkernringe durch parallel zur Wickeltrommelachse ausgeübte Krafteinwirkung an die Stirnseiten der Schubringe ziehen und sie dort planparallel anliegend festhalten. Die genannten Halteeinrichtungen können als Saugdüsen oder - vorzugsweise - als Magnete ausgebildet sein.

Zur Durchführung der eingangs genannten vorteilhaften Verfahrensvariante, bei der zunächst beide Wulstkernringe im Bereich derselben Stirnseite der Wickeltrommel positioniert werden, wonach dann der eine Wulstkernring auf die andere Seite der Wickeltrommel befördert wird, indem man ihn in eine Schräglage bringt und so über die Mantelfläche der Wickeltrommel abrollen läßt, weist die Reifenaufbaumaschine im Bereich derjenigen Wulstkernanlegevorrichtung, die der der Trennstelle der Wickeltrommelachse benachbarten Wickeltrommelstirnfläche zugeordnet ist, vorzugsweise eine Druckluft-Blasdüse auf, die so angeordnet und ausgerichtet ist, daß der von ihr ausgehende Druckluftstrom einen schmalen, achsparallelen Streifen der Mantelfläche der Wickeltrommel und gegebenenfalls deren Verlängerungen in Richtung der gegenüberliegenden Wulstkernanlegevorrichtung überstreicht. Eine solche Druckluftdüse kann in einfacher Weise montiert und justiert werden, und sie bewerkstelligt die Überführung des einen Wulstkernringes von der einen Wickeltrommelseite auf die andere, und zwar ohne jegliche komplizierte mechanische Einrichtungen.

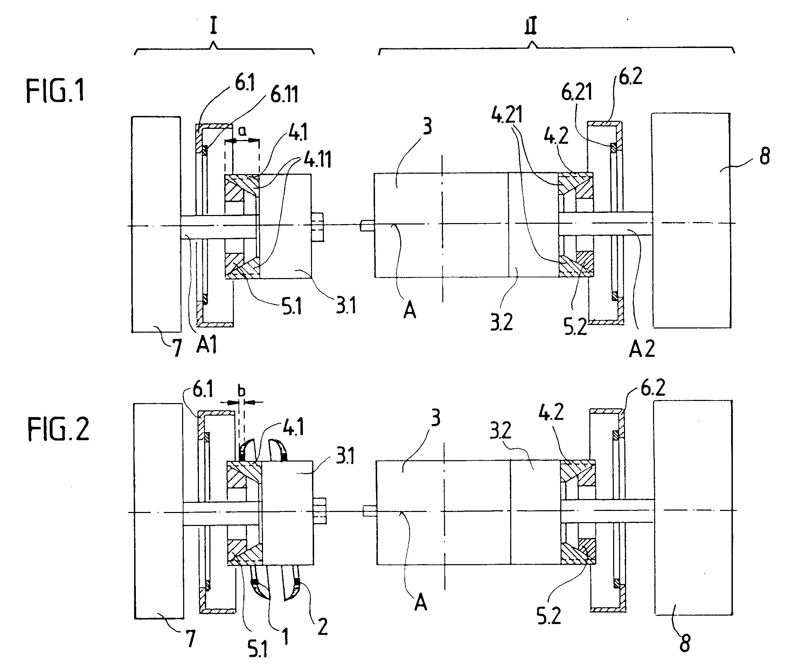

Die beigefügte Zeichnung veranschaulicht das erfindungsgemäße Verfahren am Beispiel einer vorzugsweise zu dessen Durchführung verwendeten Vorrichtung, die in den Fig. 1 bis 8 in einzelnen Phasen des Verfahrensablaufs in schematischer Darstellung wiedergegeben ist.

Fig. 1 zeigt die Reifenaufbaumaschine in ihrer Ausgangsstellung. Sie weist einen in Richtung der Drehachse A der Wickeltrommel 3 verfahrbaren Teil I und einen ortsfesten Teil II auf. Die Wickeltrommelachse A besteht aus einer an der Verschiebeeinheit 7 fliegend gelagerten ersten Teilachse A1 und einer an der Antriebs-und Steuereinheit 8 fliegend gelagerten, die Wickeltrommel 3 tragenden zweiten Teilachse A2. Die beiden Teilachsen A1 und A2 tragen je eine Wickeltrommel-Verlängerung 3.1 und 3.2 sowie je eine koaxial angeordnete Wulstkernanlegevorrichtung, die jeweils aus einem aus Segmenten 4.11 bzw. 4.21 zusammengesetzten Tragring 4.1 bzw. 4.2 sowie einem mit Halteeinrichtungen 6.11 bzw. 6.21 ausgerüsteten axial verschiebbarem Schubring 6.1 bzw. 6.2 besteht. Innerhalb der Tragringe 4.1 bzw. 4.2 sind konische Spreizkörper 5.1 bzw. 5.2 angeordnet, auf deren Mantelflächen sich die ihnen zugewandten entsprechend geformten Innenseiten der Tragringsegmente 4.11 bzw. 4.21 gleitend abstützen, so daß eine axiale Verschiebung der Spreizkörper 5.1 und 5.2 eine exakte konzentrische Aufweitung der Tragringe 4.1 bzw. 4.2 bewirkt.

Wie Fig. 2 zeigt, werden die beiden für den herzustellenden Reifen benötigten Wulstkernringe 1 und 2 zunächst durch den Zwischenraum der auseinandergefahrenen Maschinenteile I und II auf den in der Zeichnung linken Tragring 4.1 bzw. auf die Trommelverlängerung 3.1 locker aufgehängt. Die Breite a der Tragringe 4.1 und 4.2 beträgt ein Mehrfaches der Breite b der Wulstkernringe 1 und 2.

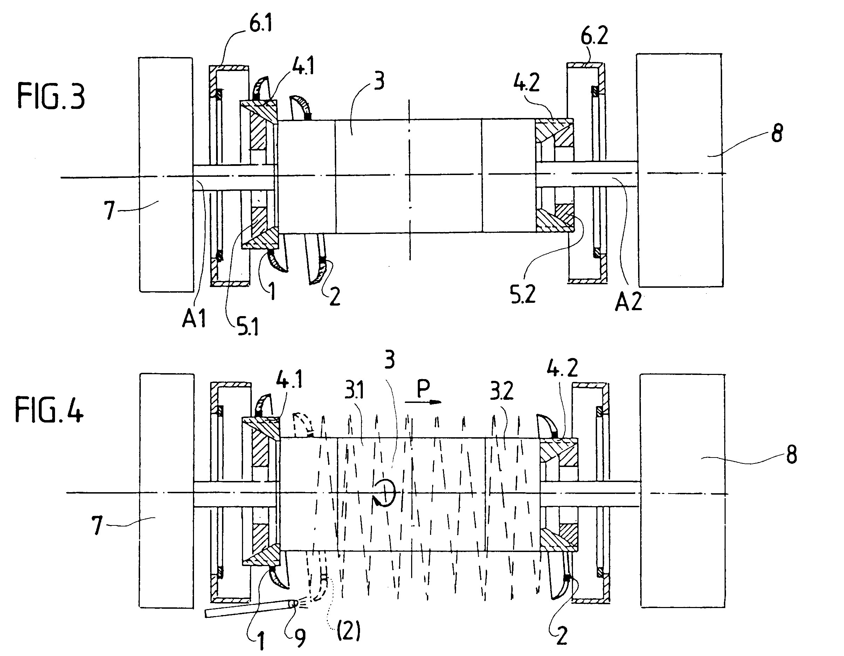

Sodann wird der in der Zeichnung linke Maschinenteil I so axial verfahren, daß die freien Enden der beiden fliegend gelagerten Teilachsen A1 und A2 gemäß Fig. 3 miteinander vereinigt werden und eine durchgehende Rotationsachse A bilden, und der in der Zeichnung linke Tragring 4.1 wird durch axiale Verschiebung seines Spreizkörpers 5.1 aufgeweitet, bis er sich zumindest teilweise von innen an den Wulstkernring 1 anlegt. Hiernach versetzt man die Wickeltrommelachse A samt allen auf ihr gelagerten Aggregaten in Rotation und läßt - wie in Fig. 4 angedeutet - aus der beispielsweise an der Maschinenunterseite angeordneten Druckluftdüse 9 einen Luftstrahl austreten, der den locker auf der Trommelverlängerung 3.1 hängenden Wulstkernring 2 in eine Schräglage bringt, in der er zwangsläufig infolge der Rotation der ihn tragenden Mantelfläche in Richtung des Pfeiles auf einer Spiralbahn von links nach rechts wandert, bis er schließlich auf dem Tragring 4.2 locker aufliegt.

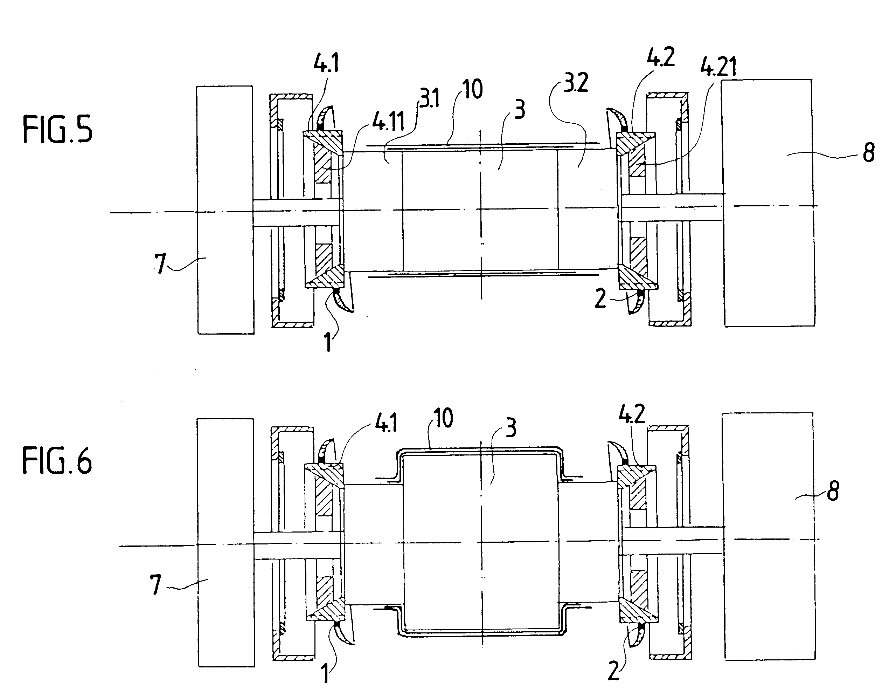

Anschließend beginnt man, wie Fig. 5 erkennen läßt, in üblicher Weise auf der Wickeltrommel 3 die Karkasse 10 lagenweise aufzubauen, und der Tragring 4.2 wird durch axiale Verschiebung des Spreizkörpers 4.21 so konzentrisch aufgeweitet, daß er sich von innen am Wulstkernring 2 anlegt.

Fig. 6 zeigt die nächste Fertigungsstufe, in der die Wickeltrommel durch radiale Aufweitung an ihren Stirnenden umlaufende Schultern bildet, die die Anlageflächen für die Anbringung der Wulstkernringe 1 und 2 bilden.

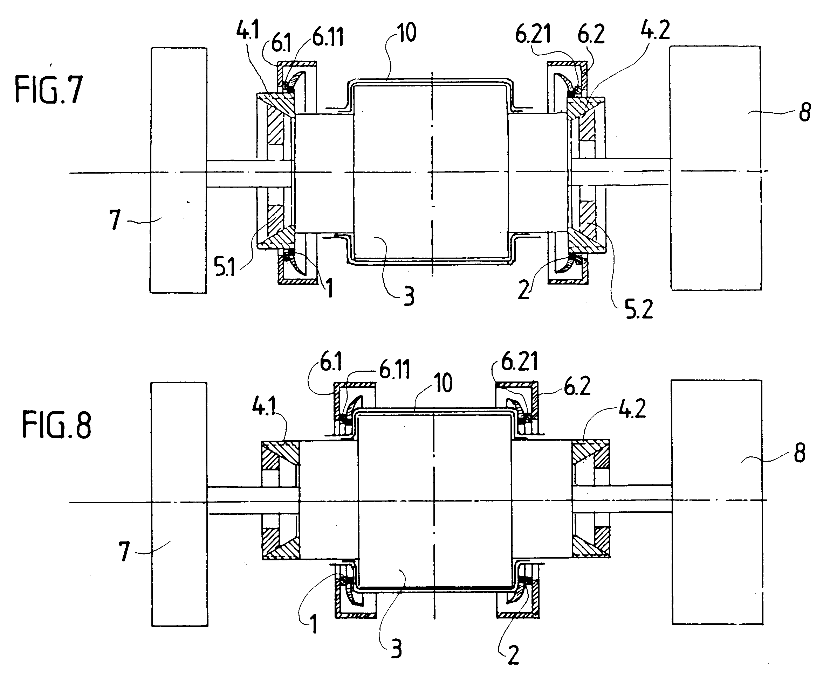

Anschließend beginnt der eigentliche Anlegevorgang (Fig. 7 und 8). Während die beiden Spreizkörper 5.1 und 5.2 andauernd mit leichtem Druck in Richtung der ihnen zugewandten Stirnseiten der Wickeltrommel 3 gedrückt werden und infolgedessen alle Tragringsegmente 4.11 bzw. 4.21 ständig unter einem entsprechenden radial nach außen gerichteten Druck stehen, werden die Schubringe 6.1 und 6.2 über die Tragringe 4.1 bzw. 4.2 hinweg in Richtung auf die ihnen zugewandten Stirnseiten der Wickeltrommel 3 axial verfahren, wobei sie sich an die Wulstkernringe 1 bzw. 2 anlegen, diese dann vor sich her schieben und sie dabei mehr und mehr - wie Fig. 7 zeigt - planparallel und konzentrisch zur Wickeltrommelachse ausrichten.

Sobald dieses Stadium erreicht ist, werden die Tragringe 4.1 und 4.2 auf ihren ursprünglichen Durchmesser zurückgefahren, wobei die Wulstkernringe 1 und 2 in ihrer konzentrischen Position fixiert bleiben, da sie mittels der Halteeinrichtungen 6.11 bzw. 6.21 unverrückbar an den Schubringen 6.1 bzw. 6.2 festgehalten werden. Die axiale Verschiebung der Schubringe 6.1 und 6.2 wird dann fortgesetzt, bis die Wulstkernringe 1 und 2 auf den Karkaßlagen an den Schultern der Wickeltrommel 3 gemäß Fig. 8 zur Anlage kommen und gegen diese gepreßt werden. Da die durch diese Pressung erzielte Haftung zwischen der Gummi-Ummantelung der Wulstkernringe und den Karkaßlagen größer ist als die Haltekraft der Halteeinrichtungen 6.11 und 6.21 können die Schubringe 6.1 und 6.2 anschließend ohne weiteres wieder in ihre Ausgangslage zurückgefahren werden, während die beiden Wulstkernringe 1 und 2 in idealer konzentrischer Positionierung an der Karkasse 10 verbleiben. Anschließend werden in üblicher Weise die Karkaßränder umgebukt und der Aufbau des Reifenrohlings fortgesetzt und vervollständigt.

## Patentansprüche

1. Verfahren zum Anlegen der Wulstkernringe (1, 2) an die Lagen einer auf einer im Durchmesser vergrößerbaren Wickeltrommel (3) aufgebauten Reifenkarkasse (10), wobei je ein Wulstkernring (1, 2) auf beiderseits der Wickeltrommel (3) koaxial zur Wickeltrommelachse (A) angeordnete Tragringe (4.1, 4.2) aufgebracht, auf diesen bis an die an den Stirnseiten der Wickeltrommel (3) anliegenden Teile der Karkasse (10) verfahren und in axialer Richtung gegen die Karkasse (10) gedrückt wird,
**dadurch gekennzeichnet,**
daß die Wulstkernringe (1, 2) zunächst locker auf die Tragringe (4.1, 4.2) aufgelegt und dann mit Hilfe von koaxial zur Wickeltrommelachse (A) angeordneten Schubringen (6.1, 6.2) auf den Tragringen (4.1, 4.2) axial gleitend in Richtung der Wickeltrommel (3) verschoben werden, wobei sie mit ihren den Schubringen (6.1, 6.2) zugewandten Stirnflächen vollständig an diesen zur Anlage gebracht und so zu den Stirnflächen der Wickeltrommel (3) planparallel ausgerichtet und durch gleichzeitiges radiales Aufweiten der Tragringe (4.1, 4.2) zur Wickeltrommelachse (A) zentriert werden und daß die Wulstkernringe (1, 2) in der so erzeugten zentrierten und zur Stirnfläche der Wickeltrommel (3) planparallelen Position an den Schubringen (6.1, 6.2) fixiert und dann durch axiale Bewegung der Schubringe in Richtung der Wickeltrommel (3) verfahren und in axialer Richtung an die Karkasse (10) gedrückt werden.

2. Verfahren nach Anspruch 1, dadurch gekennzeichnet, daß zunächst beide Wulstkernringe (1, 2) im Bereich derselben Stirnseite der auf ihren Minimaldurchmesser eingefallenen Wickeltrommel (3) positioniert werden, wobei der für diese Stirnseite bestimmte erste Wulstkernring (1) locker auf den entsprechenden ersten Tragring (4.1) und der zweite Wulstkernring (2) locker auf das diesseitige Ende der Wickeltrommel (3) oder eine zwischen der Wickeltrommel (3) und dem ersten Tragring (4.1) konzentrisch zur Wickeltrommelachse (A) angeordnete und mit dieser rotierbare Wickeltrommel-Verlängerung (3.1) aufgelegt wird, und daß dann der zweite Wulstkernring (2) mit einem ihn mit einer zur Wickeltrommelachse (A) parallelen Kraftkomponente einseitig treffenden Druckluftstrahl beaufschlagt, zur Wickeltrommelachse (A) gekippt und in einer Schräglage gehalten wird, in der er auf dem Mantel der in Rotation versetzten Wickeltrommel (3) und gegebenenfalls der besagten Wickeltrommel-Verlängerung (3.1) spiralig abrollt und dabei in axialer Richtung über die Wickeltrommel wandert, bis er locker auf dem zweiten Tragring (4.2) aufliegt, und daß dann die Wickeltrommel (3), nachdem sie in üblicher Weise mit Karkaßlagen (10) bewickelt wurde, expandiert wird und die Wulstkerneringe (1, 2) durch konzentrisches radiales Aufweiten der Tragringe (4.1, 4.2) zur Wickeltrommelachse (A) zentriert, an die Karkasse (10) herangeführt und axial gegen diese gedrückt werden.

3. Reifenaufbaumaschine zur Durchführung des Verfahrens nach Anspruch 1 mit einer durchmesserveränderlichen Wickeltrommel (3), deren Achse (A) seitlich der Wickeltrommel in zwei zueinander fluchtende, fliegend gelagerte Abschnitte (A1, A2) axial teilbar ist, von denen mindestens einer axial verschiebbar ist, sowie je einer den beiden Stirnflächen der Wickeltrommel (3) gegenüberliegenden, koaxial zur Wickeltrommelachse (A) verschiebbaren Wulstkernanlegevorrichtung, die einen den jeweiligen Wulstkernring aufnehmenden und bis an die ihr zugewandte Stirnfläche der Wickeltrommel (3) koaxial zur Wickeltrommelachse (A) verschiebbaren Tragring (4.1, 4.2) aufweist, dadurch gekennzeichnet, daß die Tragringe (4.1, 4.2) aus konzentrisch zur Wickeltrommelachse (A) angeordneten, radial verschiebbaren Segmenten (4.11, 4.21) bestehen, deren axiale Breite (a) ein Mehrfaches der Wulstkernbreite (b) beträgt, und daß Schubringe (6.1, 6.2) vorgesehen sind, die planparallel zu den Stirnflächen der Wickeltrommel (3) und konzentrisch zur Wickeltrommelachse (A) angeordnet und über die Tragringe (4.1, 4.2) hinweg bis an die ihnen zugewandten Stirnflächen der Wickeltrommel (3) axial verschiebbar sind.

4. Reifenaufbaumaschine nach Anspruch 3, dadurch gekennzeichnet, daß die axiale Breite (a) der Tragringe (4.1, 4.2) das 3- bis 10-fache der Wulstkernbreite (b) beträgt.

5. Reifenaufbaumaschine nach Anspruch 3 oder 4, dadurch gekennzeichnet, daß zur konzentrischen radialen Verschiebung der Segmente (4.11, 4.21) konische, koaxial zur Wickeltrommelachse (A) verschiebbare Spreizkörper (5.1, 5.2) vorgesehen sind, auf deren Mantelflächen sich die Segmente (4.11, 4.21) gleitend abstützen.

6. Reifenaufbaumaschine nach einem der Ansprüche 3 bis 5, dadurch gekennzeichnet, daß die Schubringe (6.1, 6.2) an ihren der Wickeltrommel (3) zugewandten Stirnseiten ringsum verteilte Halteeinrichtungen (6.11, 6.21) tragen, die die Wulstkerne durch parallel zur Wickeltrommelachse (A) ausgeübte Krafteinwirkung an die Stirnseiten der Schubringe (6.1, 6.2) ziehen und sie - planparallel an diesen anliegend - halten, und daß die Schubringe (6.1, 6.2) in Richtung der Wickeltrommel (3) über die Tragringe (4.1, 4.2) hinaus axial verschiebbar sind.

7. Reifenaufbaumaschine nach einem der Ansprüche 3 bis 5, dadurch gekennzeichnet, daß die Halteeinrichtungen (6.11, 6.21) als Magnete ausgebildet sind.

8. Reifenaufbaumaschine nach einem der Ansprüche 3 bis 6, dadurch gekennzeichnet, daß die Halteeinrichtungen(6.1, 6.21) als Saugdüsen ausgebildet sind.

9. Reifenaufbaumaschine nach einem der Ansprüche 3 bis 8 zur Durchführung des Verfahrens nach Anspruch 2, dadurch gekennzeichnet, daß an derjenigen Wulstkernanlegevorrichtung, die der der Trennstelle der Wickeltrommelachse (A) benachbarten Wickeltrommelstirnfläche zugeordnet ist, eine Druckluft-Blasdüse (9) so angeordnet und ausgerichtet ist, daß der von ihr ausgehende Luftstrom einen schmalen, achsparallelen Streifen der Mantelfläche der Wickeltrommel (3) und gegebenenfalls der mit dieser fluchtenden Trommel-Verlängerungen (3.1, 3.2) in Richtung (P) der anderen Wulstkernanlegevorrichtung überstreicht.

## Claims

1. Method of fitting the bead core rings (1, 2) to the plies of a tyre carcase (10), which is assembled on a winding drum (3) having an enlargeable diameter, each bead core ring (1, 2) being applied to respective bearing rings (4.1, 4.2), which are disposed on each side of the winding drum (3) in a coaxial manner relative to the winding drum axis (A), and being conveyed on said bearing rings as far as the portions of the carcase (10) which abut against the end faces of the winding drum (3), each bead core ring being urged towards the carcase (10) in the axial direction, characterised in that the bead core rings (1, 2) are initially placed loosely on the bearing rings (4.1, 4.2) and are then displaced on the bearing rings (4.1, 4.2) axially slidingly in the direction of the winding drum (3) by means of sliding rings (6.1, 6.2), which are disposed coaxially relative to the winding drum axis (A), the bead core rings being brought to abut fully against the sliding rings (6.1, 6.2), with their end faces facing said sliding rings, and such bead core rings being hereby orientated in a plane-parallel manner relative to the end faces of the winding drum (3) and being centred by a simultaneous, radial widening of the bearing rings (4.1, 4.2) relative to the winding drum axis (A), and in that the bead core rings (1, 2) are secured on the sliding rings (6.1, 6.2) in the centred position, which is hereby produced and is plane-parallel relative to the end face of the winding drum (3), and the bead core rings are then conveyed in the direction of the winding drum (3) by an axial movement of the sliding rings and are urged against the carcase (10) in the axial direction.

2. Method according to claim 1, characterised in that initially both bead core rings (1, 2) are positioned in the region of the same end face of the winding drum (3), which has dropped to its mimimum diameter, whereby the first bead core ring (1), intended for this end face, is placed loosely on the corresponding first bearing ring (4.1), and the second bead core ring (2) is placed loosely on the end of the winding drum (3) facing this end face or on a winding drum extension (3.1), which is disposed between the winding drum (3) and the first bearing ring (4.1) in a concentric manner relative to the winding drum axis (A) and is rotatable with the said axis, and in that a jet of compressed-air is applied to the second bead core ring (2) and encounters it unilaterally with a force component parallel to the winding drum axis (A), the second bead core ring is tilted towards the winding drum axis (A) and is retained in an inclined position, in which it rolls helically on the surface of the winding drum (3), which is set in rotation, and optionally on the surface of said winding drum extension (3.1) and thereby travels in the axial direction over the winding drum until it lies loosely on the second bearing ring (4.2), and in that the winding drum (3) is then expanded after it has been wound in conventional manner with carcase plies (10), and the bead core rings (1, 2) are centred relative to the winding drum axis (A) by a concentric, radial widening of the bearing rings (4.1, 4.2), are supplied to the carcase (10) and urged axially towards such.

3. Tyre assembling machine for accomplishing the method according to claim 1, including a variable-diameter winding drum (3), the axis (A) of which is axially divisible, laterally of the winding drum, into two detachably mounted portions (A1, A2), which are in alignment with one another and at least one of which is axially displaceable, and including a bead core fitting device, which is situated opposite each of the two end faces of the winding drum (3) and is displaceable coaxially relative to the winding drum axis (A), said device having a bearing ring (4.1, 4.2), which accommodates the respective bead core ring and is diplaceable coaxially relative to the winding drum axis (A) as far as the end face of the winding drum (3) facing the device, characterised in that the bearing rings (4.1, 4.2) comprise radially displaceable segments (4.11, 4.21), which are disposed concentrically relative to the winding drum axis (A) and the axial width (a) of which is a multiple of the bead core width (b), and in that sliding rings (6.1, 6.2) are provided, which are disposed in a plane-parallel manner relative to the end faces of the winding drum (3) and concentrically relative to the winding drum axis (A) and are axially displaceable beyond the bearing rings (4.1, 4.2) as far as the end faces of the winding drum (3) facing the bearing rings.

4. Tyre assembling machine according to claim 3, characterised in that the axial width (a) of the bearing rings (4.1, 4.2) is 3- to 10-times the bead core width (b).

5. Tyre assembling machine according to claim 3 or 4, characterised in that conical expanding members (5.1, 5.2), which are displaceable coaxially relative to the winding drum axis (A), are provided for the concentric, radial displacement of the segments (4.11, 4.21), the segments (4.11, 4.21) being slidingly supported on the surfaces of said expanding members.

6. Tyre assembling machine according to one of claims 3 to 5, characterised in that the sliding rings (6.1, 6.2) are provided, on their end faces facing the winding drum (3), with retaining means (6.11, 6.21), which are distributed all around and draw the bead cores to the end faces of the sliding rings (6.1, 6.2) as a result of the effect of a force exerted parallel to the winding drum axis (A), and such retaining means retain said bead cores - lying adjacent such in a plane-parallel manner - and in that the sliding rings (6.1, 6.2) are axially displaceable in the direction of the winding drum (3) beyond the bearing rings (4.1, 4.2).

7. Tyre assembling machine according to one of claims 3 to 5, characterised in that the retaining means (6.11, 6.21) are magnets.

8. Tyre assembling machine according to one of claims 3 to 6, characterised in that the retaining means (6.11, 6.21) are suction nozzles.

9. Tyre assembling machine according to one of claims 3 to 8 for accomplishing the method according to claim 2, characterised in that a compressed-air blast nozzle (9) is so disposed and orientated on the particular bead core fitting device associated with the end face of the winding drum, adjacent the dividing point of the winding drum axis (A), that the flow of air emerging from said nozzle travels over a narrow, axis-parallel strip of the surface of the winding drum (3), and optionally of the drum extensions (3.1, 3.2), in alignment therewith, in direction (P) of the other bead core fitting device.

## Revendications

1. Procédé pour mettre en place des tringles de talons (1, 2) sur les plis d'une carcasse de pneumatique (10) disposée sur un tambour d'enroulement (3) dont le diamètre peut être augmenté, les tringles respecttives (1, 2) étant disposées sur des anneaux de support (4.1, 4.2), installés des deux côtés du tambour d'enroulement (3) coaxialement par rapport à l'axe (A) de ce tambour et sur lesquels lesdites tringles sont déplacées jusqu'aux parties, s'appliquant contre les côtés frontaux du tambour d'enroulement (3), de la carcasse (10) et sont poussées dans une direction axiale contre la carcasse (10), caractérisé en ce que les tringles (1, 2) sont mises en place initialement de façon lâche sur les anneaux de support (4.1, 4.2) et ensuite elles sont déplacées sur les anneaux de support (4.1, 4.2) avec glissement axial en direction du tambour d'enroulement (3) à l'aide d'anneaux de poussée (6.1, 6.2), disposés coaxialement par rapport à l'axe (A) du tambour d'enroulement, lesdites tringles comportant les surfaces frontales, dirigées vers les anneaux de poussée (6.1, 6.2) et qui sont amenées complètement en application contre ces derniers en étant ainsi orientées parallèlement aux surfaces frontales du tambour d'enroulement (3) et en étant centrées par rapport à l'axe (A) du tambour d'enroulement au moyen d'un élargissement radial simultané des anneaux de support (4.1, 4.2) et en ce que les tringles (1, 2) sont fixées sur les anneaux de poussée (6.1, 6.2) dans la position centrée ainsi établie, qui est parallèle à la surface frontale du tambour d'enroulement (3) et ensuite elles sont déplacées par un mouvement axial des anneaux de poussée en direction du tambour d'enroulement (3) et elles sont appliquées dans une direction axiale contre la carcasse (10).

2. Procédé selon la revendication 1, caractérisé en ce qu'initialement les deux tringles de talons (1, 2) sont positionnées dans une zone du même côté frontal du tambour d'enroulement (3) rétracté à son diamètre minimal, la première tringle (1) correspondant à ce côté frontal étant alors disposée de façon lâche sur le premier anneau de support correspondant (4.1) tandis que la seconde tringle (2) est disposée de façon lâche sur l'extrémité correspondante du tambour d'enroulement (3) ou bien sur un prolongement (3.1) dudit tambour, situé entre le tambour d'enroulement (3) et le premier anneau de support (4.1) concentriquement par rapport à l'axe (A) du tambour et pouvant tourner avec celui-ci et en ce qu'ensuite la seconde tringle (2) est sollicitée par un jet d'air comprimé, exerçant sur elle d'un côté une composante de force orientée parallèlement à l'axe (A) du tambour, elle est basculée par rapport à l'axe (A) du tambour et elle est maintenue dans une position inclinée dans laquelle elle roule en spirale sur la périphérie du tambour d'enroulement (3), mis en rotation, et le cas échéant sur le prolongement précité (3.1) du tambour en progressant ensuite dans une direction axiale sur le tambour d'enroulement jusqu'à ce qu'elle vienne se placer de façon lâche sur le second anneau de support (4.2), et en ce qu'ensuite le tambour d'enroulement (3), après que des plis de carcasse (10) ont été enroulés d'une manière classique sur lui, est soumis à expansion et les tringles (1, 2) sont centrées par rapport à l'axe (A) du tambour d'enroulement au moyen d'une expansion radiale concentrique des anneaux de support (4.1, 4.2), elles sont amenées sur la carcasse (10) et sont appliquées axialement contre celle-ci.

3. Machine de fabrication de pneumatiques pour la mise en oeuvre du procédé selon la revendication 1, comportant un tambour d'enroulement (3) de diamètre variable, dont l'axe (A) est divisible axialement, latéralement par rapport au tambour d'enroulement, en deux parties (A1, A2), disposées en porte-à-faux, alignées mutuellement et dont au moins une est déplaçable axialement, et également des dispositifs respectifs de mise en place de tringles, situés en regard des deux surfaces frontales du tambour d'enroulement (3), déplaçables coaxialement par rapport à l'axe (A) du tambour d'enroulement, chaque dispositif comportant un anneau de support (4.1, 4.2), recevant la tringle correspondantte et déplaçable coaxialement par rapport à l'axe (A) du tambour d'enroulement jusqu'à la surface frontale, dirigée vers lui, du tambour d'enroulement (3), caractérisée en ce que les anneaux de support (4.1, 4.2) se composent de segments (4.11, 4.21) disposés concentriquement par rapport à l'axe (A) du tambour d'enroulement, déplaçables radialement et dont la largeur axiale (a) s'élève à un multiple de la largeur de tringle (b), et en ce qu'il est prévu des anneaux de poussée (6.1, 6.2), orientés parallèlement aux surfaces frontales du tambour d'enroulement (3) et disposés concentriquement par rapport à l'axe (A) du tambour d'enroulement, en étant déplaçables axialement, et au-dessus des anneaux de support (4.1, 4.2), jusqu'aux surfaces frontales, dirigées vers eux, du tambour d'enroulement (3).

4. Machine de fabrication de pneumatiques selon la revendication 3, caractérisée en ce que la largeur axiale (a) des anneaux de support (4.1, 4.2) est comprise entre trois fois et dix fois la largeur de tringle (b).

5. Machine de fabrication de pneumatiques selon une des revendications 3 ou 4, caractérisée en ce que, pour un déplacement radial concentrique des segments (4.11, 4.21), il est prévu des corps d'expansion (5.1, 5.2) de profil conique, déplaçables coaxialement par rapport à l'axe (A) du tambour d'enroulement et sur les surfaces périphériques desquelles s'appuient en glissant les segments (4.11, 4.21).

6. Machine de fabrication de pneumatiques selon une des revendications 3 à 5, caractérisée en ce que les anneaux de poussée (6.1, 6.2) portent, sur leurs côtés frontaux dirigés vers le tambour d'enroulement (3) des dispositifs de retenue (6.11, 6.21), répartis annulairement, qui tirent les tringles contre les côtés frontaux des anneaux de poussée (6.1, 6.2) par des forces exercées parallèlement à l'axe (A) du tambour d'enroulement et qui les maintiennent en les appliquant parallèlement contre lesdits anneaux, et en ce que les anneaux de poussée (6.1, 6.2) sont déplaçables axialement en direction du tambour d'enroulement (3) et au-dessus des anneaux de support (4.1, 4.2).

7. Machine de fabrication de pneumatiques selon une des revendications 3 à 5, caractérisée en ce que les dispositifs de retenue (6.11, 6.21) sont agencés sous forme d'aimants.

8. Machine de fabrication de pneumatiques selon une des revendications 3 à 6, caractérisée en ce que les dispositifs de retenue (6.1, 6.21) sont agencés comme des ventouses.

9. Machine de fabrication selon une des revendications 3 à 8, pour la mise en oeuvre du procédé selon la revendication 2, caractérisée en ce qu'il est prévu sur chaque dispositif de mise en place de tringle, qui est associé à la surface frontale de tambour adjacente à la zone de division de l'axe (A) du tambour d'enroulement, une buse (9) de soufflage d'air comprimé qui est disposée et orientée de telle sorte que le jet d'air sortant de cette buse balaie une bande étroite, parallèle à l'axe, de la surface périphérique du tambour d'enroulement (3), et le cas échéant du prolongement de tambour (3.1, 3.2) aligné avec ce dernier, dans la direction (P) de l'autre dispositif de mise en place de tringle.
